# EUROPEAN PATENT APPLICATION

(11) **EP 1 426 887 A1**
(43) Date of publication of application: **09.06.2004**
(21) Application number: 02447239.1
(22) Date of filing: 03.12.2002
(51) Int. Cl.: G06F 17/60, H04M 3/48

(54) **Apparatus and method for facilitating customer services**

(71) Applicant: Cabes, Xavier, 2170 Merksem (BE)
(72) Inventor: Cabes, Xavier, 2170 Merksem (BE)
(74) Representative: Van Malderen, Joelle

(57) **Abstract**

The present invention is related to a method for contacting a client requesting communication with a supplier, comprising the steps of:
- Receiving a communication request from a customer via a computer program, said computer program being arranged to request communication from said supplier with said customer,
- Adding said communication request in a queue selected from a group of queues, and
- Contacting said customer when all preceding communication requests have been completed,
characterised in that said computer program is installed on said customer's computer and that it comprises contact details of said supplier and of said customer.

## Description

### Field of the invention

The present invention is related to a method for providing an efficient contacting means aimed at customers wishing to contact a supplier or service provider. The present invention is also related to a software application co-operating with a communication apparatus to provide such efficient contacting means.

### State of the art

Customers wishing to contact a supplier of any kind of goods or services are usually confronted with several kinds of problems. Some companies tend to choose a personalised approach to their customers, meaning that one representative will always treat orders or questions coming from one customer. A customer trying to reach his representative will often be confronted with a busy tone or non-availability of that particular person. It is difficult for the representative to be equally available to all his customers, and availability is heavily depending on schedule and seasonal distribution. Such a system is usually relatively efficient, as the representative will be able to respond to the customer's needs, but only provided that the customer can reach the representative within an acceptable time interval.

Other companies might provide service centres in which a specific representative might treat all calls related to a specific request from the customer. In such cases, the customer has no alternative but to call one general number. Such a service will be slow and for very specific questions, it may be very difficult to target the customer directly to the best-suited representative, resulting in an inefficient response.

Another problem is associated with such service centres. Usually, such centres can be contacted through so-called "toll-free numbers", which can be requested at the telecom company. With such a toll free number, the caller does not pay any telecom cost, but the subscriber to the service pays both the telecom costs and a cost for the "toll free number" service. Such toll free numbers present several problems: they are usually not accessible from abroad and they represent a significant cost compared to normal point-to-point telecommunications using the normal channels.

### Aims of the invention

The present invention aims to provide a method easily accessible for a customer to contact a supplier at the supplier's costs, without using a "free number" as provider by telecom companies. A further aim of the present invention is to provide a communication apparatus allowing such more efficient communication.

### Summary of the invention

The present invention concerns a method for contacting a client requesting communication with a supplier, comprising the steps of:
- Receiving a communication request from a customer via a computer program, said computer program being arranged to request communication from said supplier with said customer,
- Adding said communication request in a queue selected from a group of queues, and
- Contacting said customer when all preceding communication requests have been completed,
characterised in that said computer program is installed on said customer's computer and that it comprises contact details of said supplier and of said customer.
In a preferred embodiment of the present invention, the computer program is installed on the desktop of the customer computer. Said group of queues preferably comprises a queue for reaching a specific representative or representative group, a queue for reaching the next available representative, and a queue for reaching a mailbox. Said step of contacting said customer is preferably performed automatically by a communications system. The step of contacting said customer is advantageously selected from the group comprising sending an e-mail message, an sms message, a fax message, a phone message and a pop-up web window to the customer.
In a second aspect of the present invention, a communications system for contacting a client requesting communication with a supplier is disclosed, said system comprising:
- A computer program arranged to send a communication request to a supplier, said communication request comprising customer contacting details,
- A communication management system arranged for managing the communication requests received and for establishing a suitable communication with said customer.
The communications system according to the present invention, preferably provides said suitable communication as sms, fax, e-mail, phone or web communication. Again, the computer program is preferably installed on the customer's desktop.

### Short description of the drawings

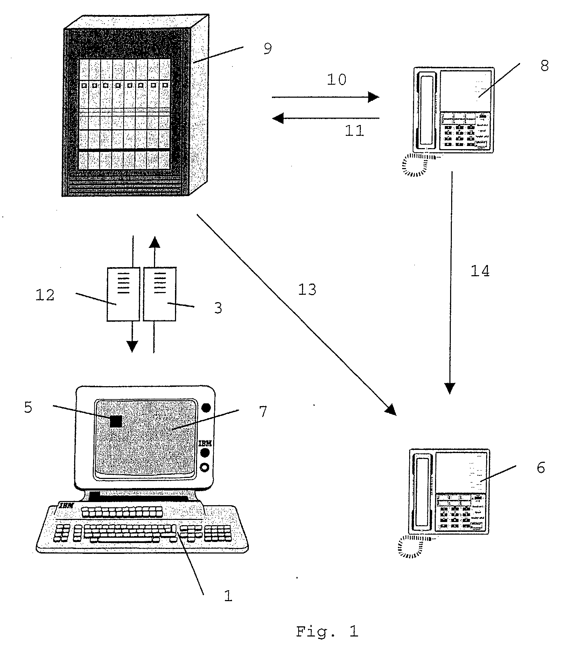

Fig. 1 represents a set-up for performing the method according to the present invention.

### Detailed description of the invention

The invention concerns a call-back system, initiated by the customer by using a real-time call-back application which operates over the Internet or another public network service, in co-operation with a telephone central or the like.

The invention will be further clarified using examples and figures.

### Example 1: Internet Distributed call-back application.

A configurable application program is made available to customers for download to their Internet-connected personal computer 1 from the company's web site. Alternatively, said application program can also be distributed by other means such as e-mail or data carriers such as floppy disk and CD-ROM. After installation and personalisation of the application program, the customer can contact the company's representatives.

The personalisation step is optional and comprises introducing or updating customer data such as name and address, and comprises at least contacting details of the customer. If the customer is a new customer, he can e.g. give a first indication of his product interests and/or envisaged size of account, .... This information can in a next phase be used to steer the customer immediately to a suitable representative of the company.

After installation of the application program, the customer can immediately contact the company. This is done e.g. by clicking an icon 5 that has been created on the customer's desktop 7. This will lead to an electronic message 3 being sent to the company's communications server 9. The message 3 comprises at least the customer's contact details such as the direct phone number (call-back number), enabling the system to call the customer's phone set 6 directly. More information such as client number and/or a password can increase security and can make the service more complete as this information can be linked to information that is present in the company's databases (e.g. with the client's buying history...). Also, an alternative call-back number can be included to ensure that the customer can be reached.

On receipt of the message, the server will select the customer's representative and verify availability (10). The representative can indicate his availability by setting a presence flag on the server 9 (11), e.g. by pushing a preprogrammed button on his phone set 8. Further, the server can check whether a representative that is present is currently busy on the phone.

Three distinct possibilities can occur:
- The representative is not present:
   The customer will be called by an automatic message system (13) and can choose between two options: leave a message for the representative or speak to another, available representative. If the latter option is selected by the customer, he will be called by the next representative that becomes available.
- The representative is present but busy:
   The customer is queued in a waiting list and is advised thereof by e-mail or an alternative message system (such as a server-pushed pop-up window)(12). As soon as the representative is available, the system dials the next customer's number (14).
- The representative is present and available:
   The system will immediately dial the customer's number and connect the representative and customer (14).

It is of course possible to identify the customer with a simple identification number, which refers to a database with all the customer's data necessary for the transaction such as name, address and VAT number. This database is preferably operated by the supplier, or alternatively by the telco provider.

An alternative embodiment concerns a different implementation of the system according to the invention. In this alternative embodiment, the customer fills in a form with all necessary data for transactions on a website hosted by the supplier. The latter processes these data and provides the customer with only a desktop icon comprising all the necessary data to identify the customer when he contacts the supplier's system. As demonstrated previously, the supplier's database can then be used to identify the customer and provide the services the customer requests.

Numerous variants of the system can be devised without substantially parting from the present invention. It is clear to the person skilled in the art that the system according to the invention can easily be adapted according to the service provider's needs. For example, a full helpdesk application can be devised in which the customers can already be directed to a suitable helpdesk engineer by indicating the field in which their problem or question is situated. Also, for multilingual call centres the customer can predesignate the desired language of the representative that will call him. Also, it is possible to provide local assistance based on locality data given by the customer.

The system according to the invention will enable a company to provide a personalised service to any customer, while maintaining maximal efficiency and availability of personnel. Further, the company also controls its communication costs since the company makes all the calls itself. For the customer, the system according to the invention provides flexibility and ensures that long holding times are non-existent. Both customer and representative can thus make the best of their available time.

With the system according to the invention, several advantages can be obtained. Clients can not be "forgotten" on a held line, prioritised customers can exist, but generally the normal waiting line is respected correctly, no connections with the wrong representative leading to replacing the customer in a new waiting queue.

Other advantages are clear: since there is a direct link from the desktop of the customer's PC, it is easy to implement, with the customer's permission, to send data such as promotions of the day, publicity,... straight to the customer's desktop. Further, the icon present on the customer is a permanent reminder of the supplier's name and logo, and this is a constant publicity effect. Active as well as passive publicity and marketing are thus possible.

Currently, many wireless appliances are available such as PDA and 3G UMTS tranceivers, and protocols for wireless communications are developed or already available such as bluetooth. It is clear that the invention can be applied on these wireless appliances too, providing extra functionality for the customer, who can e.g. check delivery status, product availability, ... directly with his "personal" sales representative from the supplier, even when the customer is out of office, on the road or with a client.

## Claims

1. A method for contacting a client requesting communication with a supplier, comprising the steps of:
• Receiving a communication request from a customer via a computer program, said computer program being arranged to request communication from said supplier with said customer,
• Adding said communication request in a queue selected from a group of queues, and
• Contacting said customer when all preceding communication requests have been completed,
**characterised in that** said computer program is installed on said customer's computer and that it comprises contact details of said supplier and of said customer.

2. The method as in claim 1, wherein the computer program is installed on the desktop of the customer computer.

3. The method as in any of the claims 1 or 2, wherein said group of queues comprises:
• A queue for reaching a specific representative or representative group,
• A queue for reaching the next available representative, and
• A queue for reaching a mailbox.

4. The method as in any of the claims 1 to 3, wherein said step of contacting said customer is performed automatically by a communications system.

5. The method as in any of the claims 1 to 4, wherein said step of contacting said customer is selected from the group comprising sending an e-mail message, an sms message, a fax message, a phone message and a pop-up web window to the customer.

6. A communications system for contacting a client requesting communication with a supplier, said system comprising:
• A computer program arranged to send a communication request to a supplier, said communication request comprising customer contacting details,
• A communication management system arranged for managing the communication requests received and for establishing a suitable communication with said customer.

7. The communications system as in claim 6, wherein said suitable communication comprises sms, fax, e-mail, phone or web communication.

8. The communications system as in claim 6 or 7, wherein the computer program is installed on the customer's desktop.
